Europäisches Patentamt

European Patent Office

Office européen des brevets

(11) Publication number: **0 190 733 B1**

## EUROPEAN PATENT SPECIFICATION

(45) Date of publication of patent specification: **22.04.92**

(51) Int. Cl.⁵: **G07F 7/10**, G07G 1/12, G07F 7/02

(21) Application number: **86101445.4**

(22) Date of filing: **04.02.86**

(54) **Data processing system and method and pocket-size hermetically sealed electronic device.**

(30) Priority: **04.02.85 JP 19423/85**

(43) Date of publication of application:
**13.08.86 Bulletin 86/33**

(45) Publication of the grant of the patent:
**22.04.92 Bulletin 92/17**

(84) Designated Contracting States:
**DE FR GB**

(56) References cited:
**EP-A- 0 057 602
DE-A- 2 738 113
FR-A- 2 477 303
GB-A- 2 140 179**

**IEEE SPECTRUM, vol. 21, no. 2, February 1984, pages 43-49, IEEE, New York, US; S.B. WEINSTEIN: "Smart credit cards: the answer to cashless shopping"**

(73) Proprietor: **KABUSHIKI KAISHA TOSHIBA
72, Horikawa-cho Saiwai-ku
Kawasaki-shi Kanagawa-ken 210(JP)**

(72) Inventor: **Kamitake, Takashi
2-20-15 Midorigaoka Meguro-ku
Tokyo(JP)**
Inventor: **Uehara, Kiyohiko
79 Toshiba Hiyoshi-ryo 1020 Hiyoshihoncho
Kouhoku-ku Yokohami-shi
Kanagawa-ken(JP)**

(74) Representative: **Lehn, Werner, Dipl.-Ing. et al
Hoffmann, Eitle & Partner Patentanwälte Ar-
abellastrasse 4
W-8000 München 81(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 190 733 B1

# Description

## BACKGROUND OF THE INVENTION

### Field of the Invention

The present invention relates to a system which carries out data processing by means of a pocket-size hermetically sealed electronic device that has an electronic device sealed in its inside, and more particularly to a pocket-size hermetically sealed electronic device which can be adapted for a wide variety of services with a single unit of the device.

### Description of the Prior Art

In recent years, development has been under way for systems such as home banking system, farm banking system, and home shopping system that can make use of the communication systems to the most advantageous degree. Along with it, development of the so-called IC card has also been advanced.

An IC card is a pocket-size hermetically sealed electronic device which has an electronic device with data processing capability sealed inside of the card in such a way as to make it impossible to read out those data that require privacy protection. The IC card is being utilized in the above systems for such purposes as security assurance and memory of necessary information of the data on the network, and its application to a wide variety of uses is being anticipated. Further, it is conceivable to use it in the field of financial services for storage of financial transaction information and encryption/descryption. further, its use as a key to scrambling and for storage of viewing/listening information for the pay television has been proposed by CII Honeywell Bull, Inc.

Moreover, it may be possible to be applied to the medical field for storage of medical information for the patients. As described in the above, the IC card is anticipated to be utilitzed in the future for all sorts of services that require data storage and data processing.

IC cards and appropriate system for the cards of the above discussed type have been broadly known, for example, as disclosed in DE-A-2,738,113 and IEEE Spectrum 21 (1984), no. 2, pages 43-49. The former patent publication describes a system allowing authorized users of portable intelligent cards (IC cards) to effect transaction via a transaction terminal. The IC card comprises at least first and second memory sections, a connection section and a control section. Command data are supplied to the connection section of the IC card from external equipment provided for receiving response signals for the functions executed. The latter article describes a plurality of possibilities of how to use IC cards as a transaction medium. The cards include microprocessors, read only memories, PROMs as well as random access memories. PROMS are divided into three sections. Namely, a first section inaccessible from outside of the cards, a second section accessible for writing or reading on the conditions determined by the internal programming of the cards and a third section opened to access without any tests.

There have been a variety of applications of IC cards as above. The functions and the kinds of data treated by the IC cards depend upon the application. Ideally, an IC card is designed in accordance with the application thereof. If each IC card is developed independently, the price of these IC cards is increased. On the other hand, it has been proposed to design IC cards for general purposes. An IC card of this proposal is endowed with basic functions to which a terminal unit gives instructions. A variety of desired applications of the IC cards can be made possible by combining suitable instructions to exploit basic functions of the IC card. For example, in the above cited IEEE article, the programmable microprocessors select a plurality of programs to be executed, and are adaptable to many different applications.

However, in this conventional system, a great number of commands and responses have to be exchanged between a terminal unit and an IC card in order to carry out a transaction. The amount of exchange of data could be decreased by defining commands which are suitable for the application, which scheme, however, is inconsistent with the concept of the general-purpose card.

### Summary of the Invention

An object of the present invention is to provide an improved system for an IC card reader/writer which reduces the amount of commands/data which must be transmitted between the terminal unit and the IC card. The object of the invention is solved by a system which carries out data processing including:

a pocket-size electronic device, comprising:

(a) a first memory for storing programs to accomplish a plurality of kinds of basic data processing,

(b) a second memory for storing various kinds of data used for the basic data processing,

(c) a connection section for supplying commands including at least function codes for selecting the programs for the plurality of kinds of basic data processing stored in the first memory,

(d) control means for selecting the program in accordance with the command from the connection section to execute the basic data processing in accordance with the program selected, and for outputting a result of the executed basic data processing as an output signal through said connection section when the basic data processing is completed;

(e) a terminal including a memory and a CPU (16a) for receiving a user command and to supply a macro instruction in accordance with the user command; and

(f) an IC card reader/writer for receiving the macro instruction from the terminal and to supply a command with a function code to the connection section,

characterised by said IC card reader/writer being constructed for supplying another command with a function code to the connection section without another macro instruction from the terminal in accordance with the output signal from the connection section.

These and other objects, features and advantages of the present invention will be more apparent from the following description of the preferred embodiments, taken in conjunction with the accompanying drawings.

## Brief Description of the Drawings

Figure 1 is a block diagram for illustrating the function of an IC card embodying the present invention;

Fig. 2 is a block diagram which shows the concrete construction of the IC card shown in Fig. 1;

Fig. 3 is a perspective view of the IC card shown in Figs. 1 and 2;

Fig. 4 is a perspective view of a data processing system which uses the IC card shown in Figs. 1 to 3;

Fig.5 is a compositional block diagram for the system shown in Fig.4;

Fig.6 is a compositional block diagram for the card reader/writer in Fig.5;

Fig.7 is a flow chart for illustrating the operation of the terminal of the system shown in Fig.4;

Fig.8 is a flow chart for illustrating the operation of the card reader/writer of the system shown in Fig.4;

Fig.9 illustrates simplified diagrams that show the data format for the data to be sent from the card reader/writer to the IC card shown in Fig.4;

Fig.10 is a flow chart for illustrating the operation of the IC card of the system shown in Fig.4;

Fig.11 is a flow chart for illustrating the sequence when the system shown in Fig.4 is applied to the credit card system; and

Fig 12 is a flow chart for illustrating the sequence when the system shown in Fig.4 is applied to the transfer system through bank.

## DESCRIPTION OF THE PREFERRED EMBODIMENTS

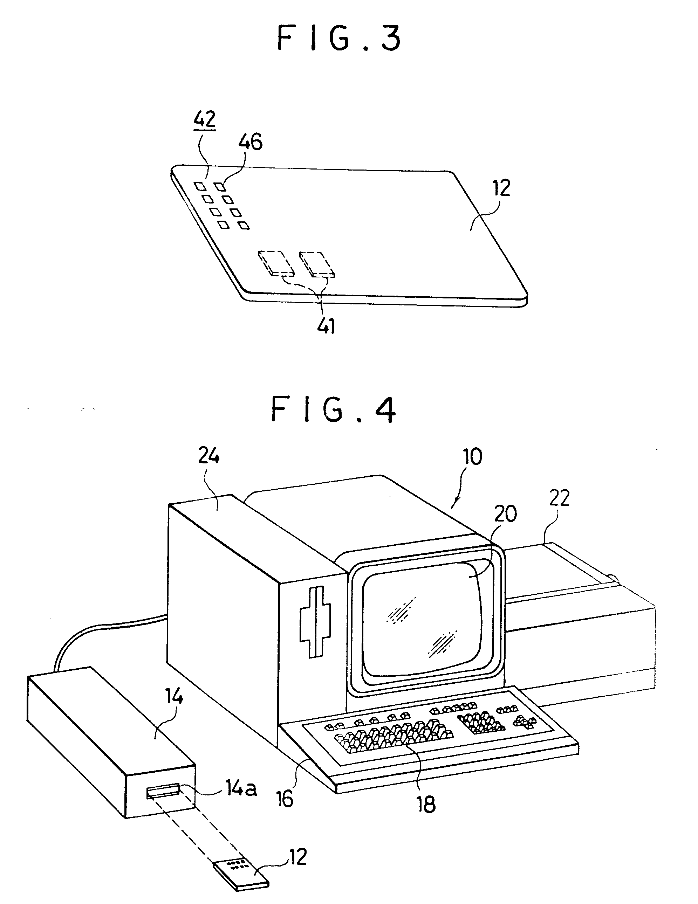

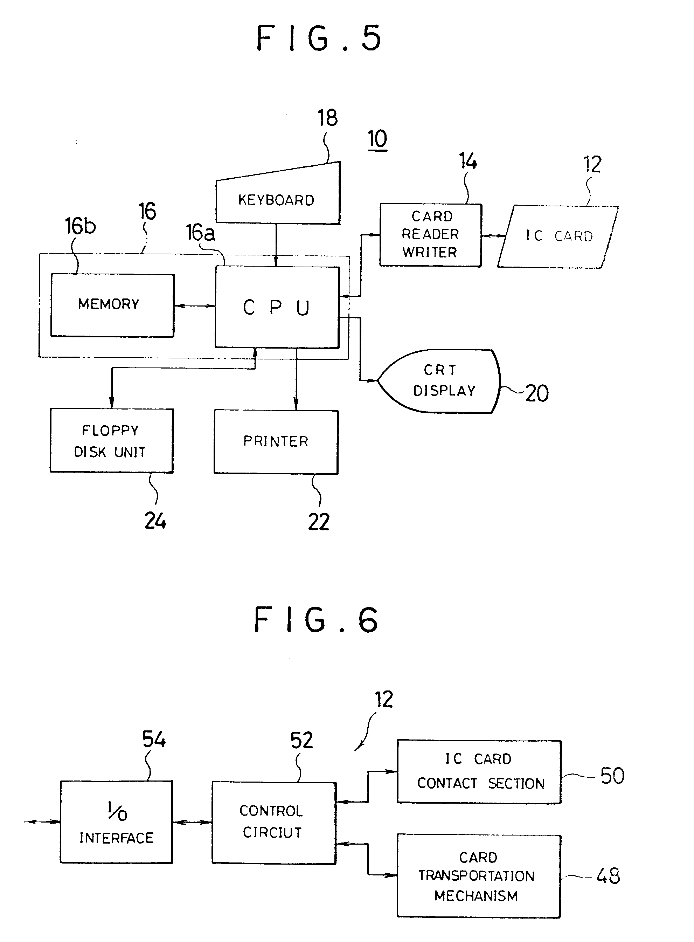

Referring to Figs.4 and 5, there is shown an IC card system 10 embodying the present invention in which the system 10 is constructed so as to have an IC card 12 connectable to a terminal 16 via a card reader/writer 14, and a keyboard 18, a CRT display 20, a printer 22, and a floppy disk 24 connected to the terminal 16.

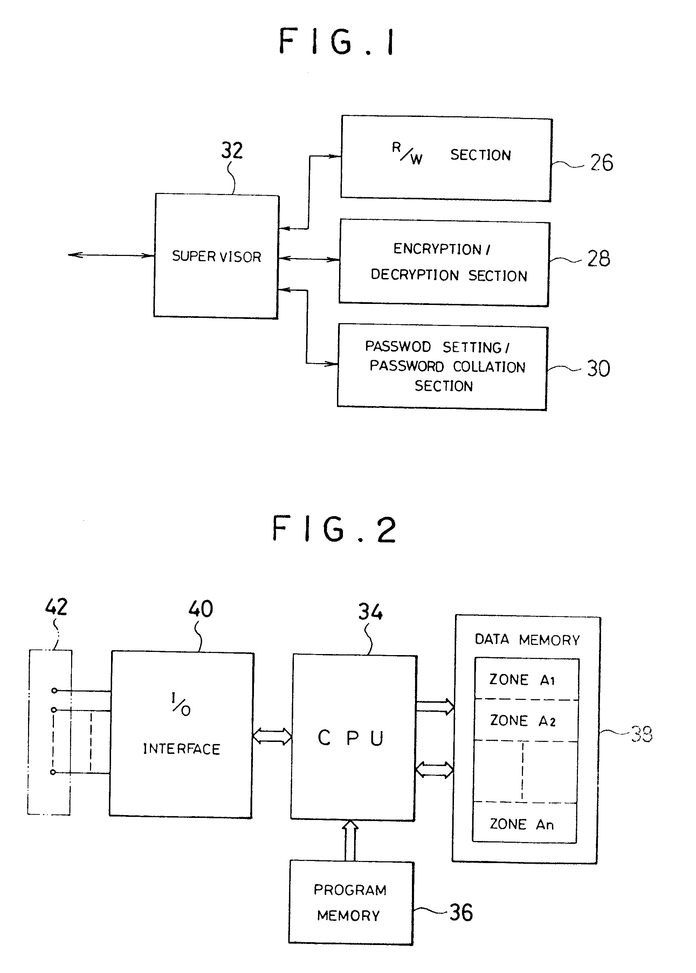

The IC card 12 which is kept by the user is for carrying out such operations as the referencing of the key data that is known to the user alone and the storing of necessary data in, for instance, purchasing a merchandise. As the diagram for its functions shown in Fig.1 indicates, the card 12 is composed of the parts for executing basic functions, such as an R/W section 26, an encryption/decryption section 28, and a password setting/password collation section 30, and a supervisor 32 which supervises these basic functions. The R/W section 26 has a function for reading the data from the data memory in the IC card 12 or for writing a data in the data memory. The encryption/decryption section 28 is for carrying out the encryption for the data to be communicated in order to prevent leakage or falsification in such a case as transmitting a data from the terminal 16 to another terminal, or for carrying out the decryption of the encrypted data. The data processing there, is carried out in accordance with an encryption algorithm which has a sufficiently high encryption capability such as the data encryption standard (DES). The password setting/password collation section 30 is the section for memorizing the passnumber (key data) set up by the user, and gives a permission for the subsequent processing by carrying out the collation of the key data that is input after setting of the password. Further, the supervisor 32 interprets the function code or the function code supplemented by a code that is sent from the card reader/writer, and causes the selection and execution of the required functions from among the basic functions.

In order to accomplish these functions, the IC card is composed of, as shown by Fig.2, a CPU 34, a program memory 36, a data memory 38, an I/O interface 40, and a contact section 42. The program memory 36 which consists of a mask ROM is for memorizing the programs of the CPU 34 that are equipped with subroutines in order to realize the various basic functions. The data memory 38 comprises a PROM and is divided into a plurality of zones $A_1$, $A_2$, ..., An with various kinds of access conditions assigned to separate zones, such as a zone from which read alone of the data is possible using an external equipment, a zone for which write alone is possible, a zone for which both of read and write are possible, a zone for which both of read and write are not possible, and a zone for which read and write are possible only after collating of the password is completed. These circuits are integrated in the form of an LSI 41 which is sealed hermetically in the card 12. It is arranged to be connectable to an external equipment only through the contact section 42. The contact section 42 has a total of eight terminals 46 such as those for power source, for inputting clock signals, for reset, and for inputting and outputting of data.

The card reader/writer 14 transfer function code data between the IC card 12 and the terminal 16. It possesses a function to decompose a macro instruction received from the terminal 16 into commands for IC card, and supplies the commands to the IC card 12 in succession. More specifically, the card reader/writer 14 includes, as shown by Figs. 5 and 6, a transportation mechanism 48 which transports the IC card 12 that is inserted to the card insertion port 14a to a prescribed position, an IC card contact section 50 which makes an electrical contact with the contact section 42 of the IC card 12 that is set at the prescribed position, a control circuit 52 which controls the device as a whole, and an I/O interface 54 which transfers function code or data between the terminal 16.

The terminal 16 is composed of a CPU 16a and a memory 16b as shown in Fig. 5, and in response to the user's demand which is input via the keyboard 18 determines selection and combination of function codes to be given to the card reader/writer 14 by reading the required data processing programs that are memorized in the memory 16b or the floppy disk unit 24. The user receives the message from the terminal 16 via the CRT display 20 or the printer 22.

Next, the operation of the system in accordance with the embodiment constructed as in the above will be described.

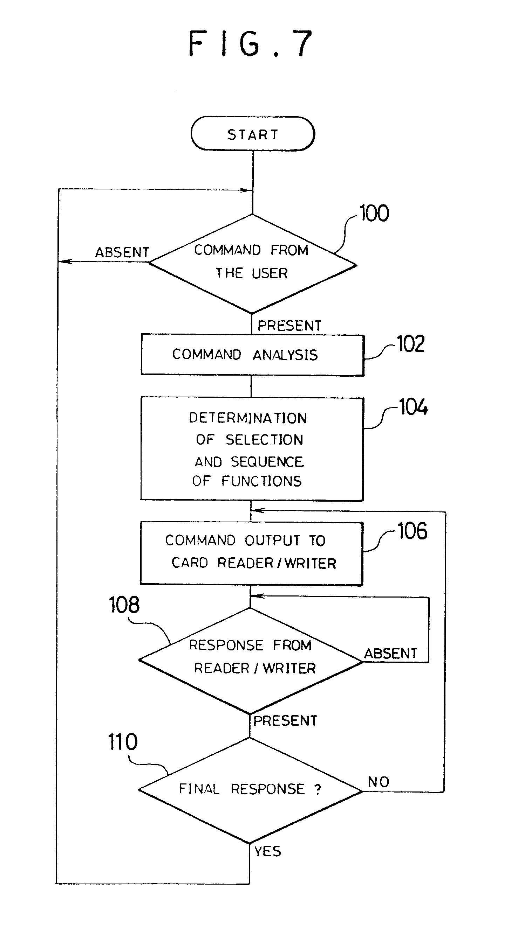

As shown by Fig. 7, in a stationary state as represented by step 100 the terminal 16 is in the state which is waiting for a command from the user. As a command from the user is input, the terminal 16 analyzes the command (step 102) and determines the selection of necessary functions and their sequence (step 104). When the sequence is determined the terminal 16 outputs necessary command (function code) to the card reader/writer 14 (step 106). Then, the terminal 16 will remain in the state of waiting until it receives from the card reader/writer 14 a response that indicates the completion of the processing required by the command (step 108). Upon receipt of a response, it judges whether it is a final response. If it is not a final response, it sends out again a command to the card reader/writer 14 in accordance with the sequence, and if it is a final response, it returns to the state of waiting for a command from the user (step 110).

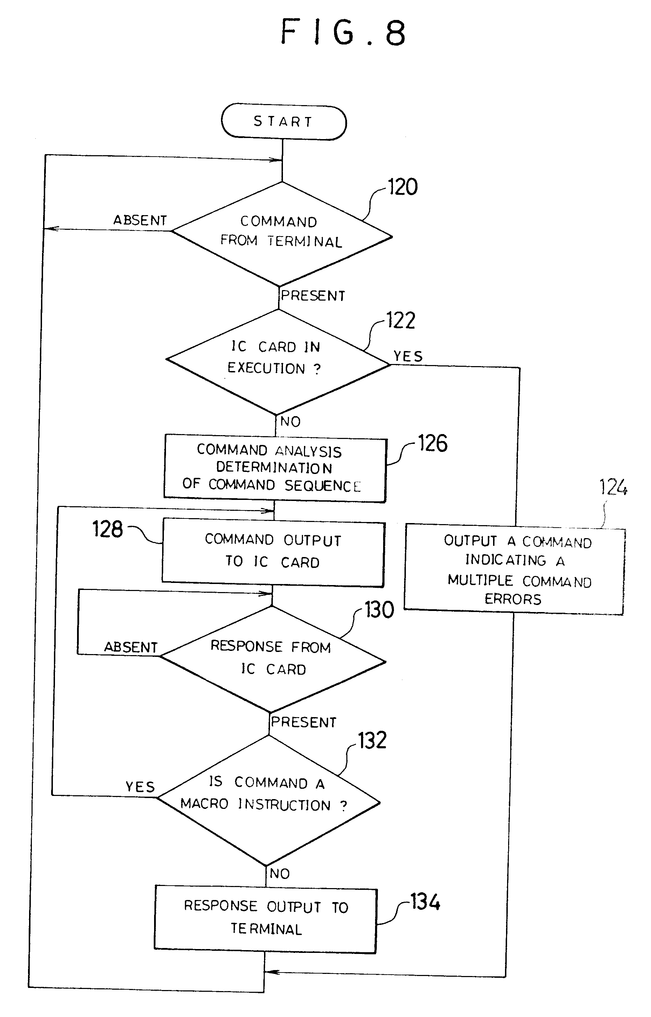

In step 120, when the card reader/writer 14 is in a stationary state, it is in the state of waiting for a command from the terminal as shown by Fig. 8. When a command is input, it judges whether the IC card is in execution (step 122), and if it is found to be executing, it goes back again to the state of waiting for a command after outputting a response which indicates that it is a multiple command error to the terminal 16 (step 124). If the IC card is found to be not in execution, it judges the command from the terminal 16 to determine a set of command sequence to be given to the IC card 12 (step 126). Following that, it outputs the first command to the IC card 12 (step 128). Then, it goes to the state of waiting for a response from the IC card 12 (step 130). When a response from the IC card 12 is received, it judges whether there still remains some commands to be given to the IC card (step 132), and if it is found that there are some, it returns to step 128 to repeat outputting of the command. Otherwise, it outputs a response to the terminal 16 (step 134).

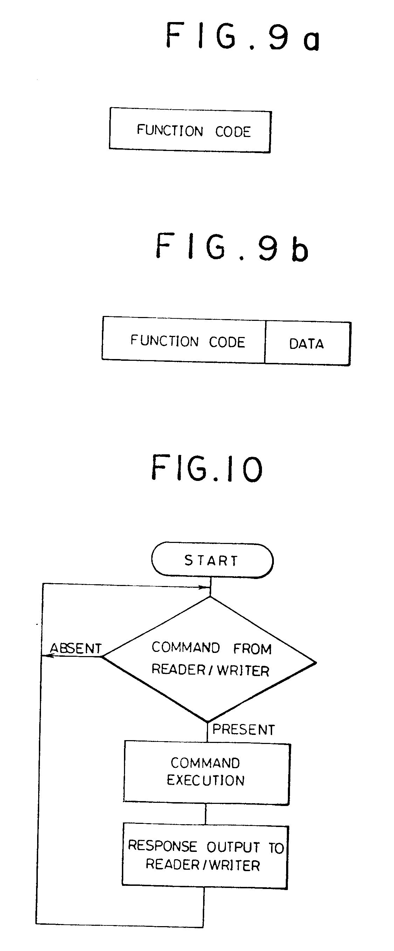

The command to be output from the card reader/writer 14 to the IC card 12 has the format with prescribed bit length as indicated in Fig. 9, with a form which contains a function code alone as shown by Fig. 9a or a form which contains a function code augmented by a data as shown by Fig. 9b.

In its stationary state, the IC card 12 is in the state of waiting for a command from the card reader/writer 14 as shown by Fig. 10 (step 140). When a command is input, it executes the basic functions in accordance with the command (142) and outputs the response to the card reader/writer 14 (step 144). Then, it goes back to its original state of waiting.

The response in this case is supplemented by the command that was input originally, to provide for a protective measure for the case where the sequence between the card reader/writer 14 is disturbed.

It should be noted as shown in the above embodiment that it is convenient to render the command system to be successively more macro as one goes upstream along IC card 12 → card reader/writer 14 → terminal 16. With such an arrangement the preparation of application programs in the upstream will become very easy.

Next, a concrete examples of operation of the system will be described.

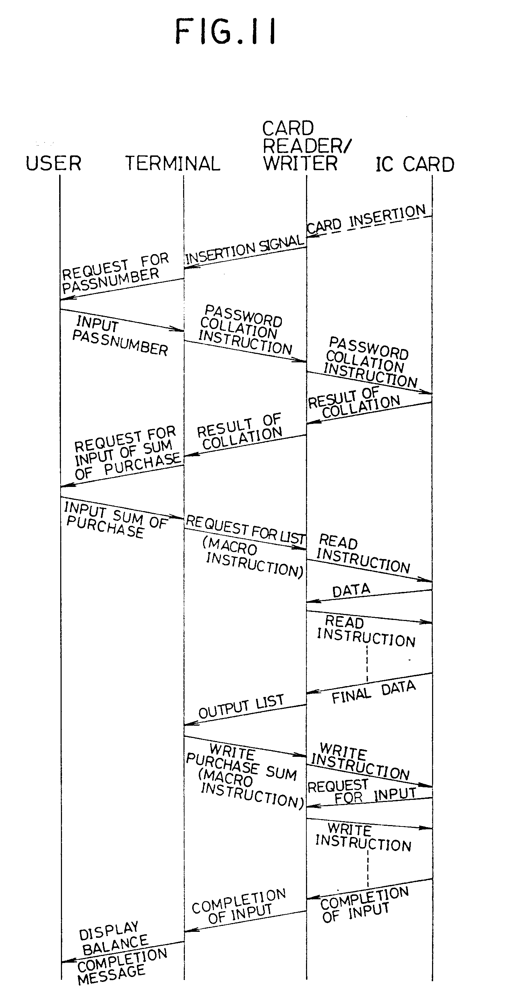

Figure 11 shows an example of credit card system. It is assumed here that the sequence for the credit card system for the terminal 16 has already been determined. The user first inserts his IC card 12 into the card reader/writer 14. The card reader/writer 14 outputs a signal that informs that an IC card 12 is inserted, to the terminal 16. Based on this, the terminal 16 urges the user to input his passnumber. When the user inputs the passnumber the terminal 16 outputs the passnumber and the password collation instruction to the card reader/writer 14. The card reader/writer 14 outputs the passnumber and the password collation instruction to the IC card 12. The IC card 12 executes the password setting/password collation function to compare and refer the input passnumber with the passnumber memorized in its inside. When the result of the collation is affirmative, the IC card 12 outputs the response to the card reader/writer 14. The card reader/writer gives a permission to input, to the terminal 16. Based on this, the terminal urges the user to input the sum of purchase of merchandises. When the user inputs the sum of the purchase, the terminal 16 requests a list of past purchases from the card reader/writer 14. This request command is given in the form of a macro instruction, and the card reader/writer 14 outputs a read command to the IC card based on it. In response to this command the IC card 12 executes the R/W function to output the data on the previous purchases that is memorized in its inside. The read command will remain in effect until the final response is received from the IC card 12, and the purchase list read during that time is held in the card reader/writer 14. In this case, in order to avoid inputting of a plurality of commands in the inside of the IC card 12, care is to be taken that a next command is output after a response is returned. When the final response from the IC card 12 is received, the card reader/writer 14 outputs the entirety of the purchase list to the terminal 16. The terminal 16 computes the balance to be applicable to the purchase for the IC card from the list, and outputs a write command for purchase sum to the card reader/writer 14 only when the purchase sum is less than the balance. This command, too, is given as a macro instruction, and the card reader/writer 14 outputs repeatedly the write command of data, to the IC card 12. The reason for repeating the writing of data is that a single write is not sufficient to write the entirety of the data. The IC card 12 executes the R/W function in accordance with the command, and makes entry of the new purchase sum in the purchase list of merchandises. When the card reader/writer 14 received the final response, the completion of inputting is informed to the terminal 16. The terminal 16 displays the balance on the CRT display 20, and outputs a message that indicates the end of the processing, completing the purchase of a merchandise by means of the credit card system.

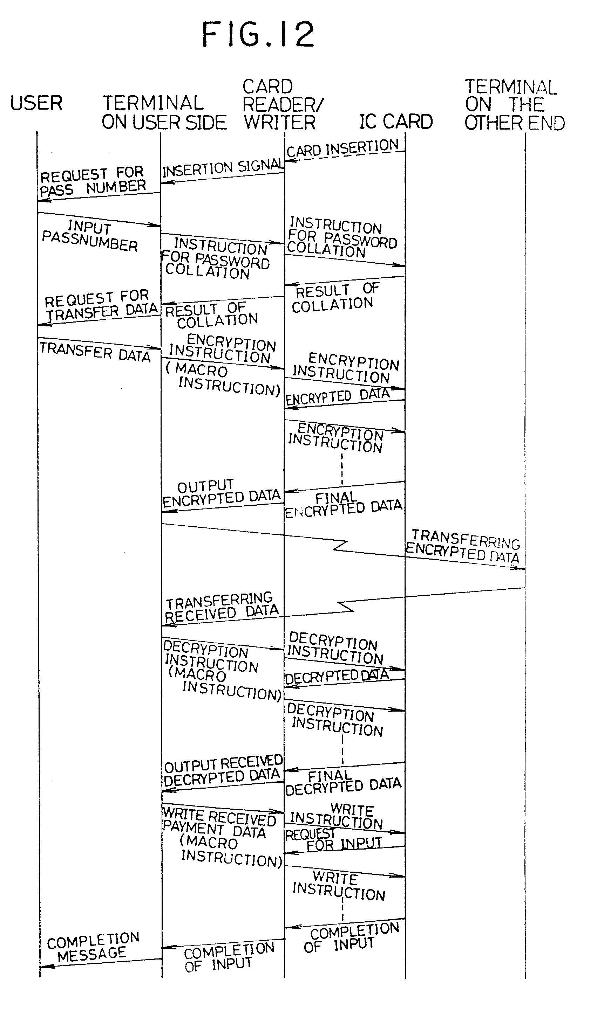

Next, an example of application of the IC card to the transfer system through bank will be described by referring to Fig. 12.

It will be assumed that the terminal 16 has already determined the sequence for the transfer system through bank. Form insertion of the credit card 12, through password collation, and up to input permission by the card reader/writer 14 are carried out based on the procedure similar to the credit card system described in the above. Then, the terminal 16 urges the user to input necessary transfer data such as the bank account number of the payee, the bank account number of the payer, and the sum of transfer. When the user inputs the transfer data, the terminal 16 outputs an instruction for encrypting the transfer data to the card reader/writer 14. This instruction is given in the form of a macro instruction, and based on this, the card reader/writer 14 outputs to the IC card 12 an encrypted command supplemented by the transfer data. The IC card 12 executes the encryption/decryption function, and outputs an encrypted data to the card reader/writer 14. The card reader/writer 14 stores the encrypted data in its inside until completion of the encryption of the transfer data. After the encryption of the transfer data, the card reader/writer 14 outputs the encrypted data to the terminal 16 upon receipt of the final encrypted data. The terminal 16 transmits the encrypted data to the terminal for the other party (bank) via a circuit. In response to this, the terminal of the other party transmits a signal which acknowledges the receipt of the data, where the signal transmitted is an encrypted data too. When this data is received the terminal 16 outputs a decryption instruction along with the received data to the card reader/writer 14. This instruction is also a macro instruction so that the card reader/writer 14 outputs continuously the decryption instruction, to the IC card 12. Based on the instruction the IC card 12 executes the encryption/decryption function in its inside, and outputs the decrypted data obtained to the card reader/writer 14. Upon receipt of the final decrypted data, the card reader/writer 14 outputs the entirety of the decrypted data to the terminal 16. Then, in order to keep a documentary evidence in the inside of the IC card 12, the terminal 16 outputs the transfer data and the received data along with a write command, to the card reader/writer 14. The command is also a macro command, and the card reader/writer 14 outputs continuously the write command to the IC card 12. The IC card 12 executes the R/W function in its inside and stores the above data in its inside. Upon receipt of the final response from the IC card 12, the card reader/writer 14 outputs a signal that indicates the completion of inputting to the terminal 16. The terminal 16 outputs the message that indicates the completion of transfer on the CRT display 20. With this, the transfer operation by means of the transfer system through bank is completed.

In this manner, according to the present embodiment the software that determines the function selection and the processing sequence in the inside of the IC card 12, through the operation on the terminal 16, can be constructed at will by the provider of the service so that it is possible to meet a wide variety of data processing requirements. This becomes possible due to the circumstance that a plurality of basic functions are given to the IC card 12 and that an arrangement is made to permit a selective execution of these basic functions. These basic functions are not limited to those described in the foregoing so that the utility of the present invention can be increased greatly by arranging the functions to be applicable to all sorts of services and be of general use and basic character.

It is to be noted that although the IC card is described in conjunction with the pocket-size hermetically sealed electronic device, the present invention is not limited to a card-like structure and may be applied to structures of block-like or pencil-like.

## Claims

1. A system which carries out data processing, including:

    a pocket-size electronic device (12), comprising:

    (a) a first memory (36) for storing programs to accomplish a plurality of kinds of basic data processing,

    (b) a second memory (38) for storing various kinds of data used for the basic data processing,

    (c) a connection section (42) for supplying commands including at least function codes for selecting the programs for the plurality of kinds of basic data processing stored in the first memory,

    (d) control means (34) for selecting the program in accordance with the command from the connection section to execute the basic data processing in accordance with the program selected, and for outputting a result of the executed basic data processing as an output signal through said connection section when the basic data processing is completed;

    (e) a terminal (16) including a memory (16b) and a CPU (16a) for receiving a user command and to supply a macro instruction in accordance with the user command; and

    (f) an IC card reader/writer (14) for receiving the macro instruction from the terminal (16) and to supply a command with a function code to the connection section,

    characterised by said IC card reader/writer (14) being constructed for supplying another command with a function code to the connection section without another macro instruction from the terminal (16) in accordance with the output signal from the connection section.

2. The data processing system as claimed in claim 1, wherein another command from the IC card reader/writer (14) to the connection section (42) is predetermined by the ouput signal from the connection section (42).

3. The data processing system as claimed in claim 1, wherein the plurality of kinds of basic data processings include a data read/write processing, an encryption/decryption processing for preventing leakage and falsification of communication data, and a password setting/password collation processing.

4. The data processing system as claimed in claim 1, wherein the pocket-size electronic device (12) comprises a hermetically-sealed IC card.

5. The data processing system as claimed in claim 1 wherein the first memory (36) comprises a mask ROM.

6. The data processing system as claimed in claim 1, wherein the second memory (38) comprises a PROM, and the control means (34) comprises a CPU.

7. The data processing system as claimed in claim 1, wherein said second memory (38) of the pocket-size electronic device (12) is divided into a plurality of zones asigned separately with different access conditions.

8. In a system which carries out data processing by means of a pocket size electronic device, according to one of the previous claims, a data processing method, including the steps of:

    (a) supplying a macro instruction from a terminal (16) including a memory (16b) and a CPU (16a) to an IC card reader/writer (14) in accordance with a user command;

    (b) supplying one of a plurality of commands from the IC card reader/writer (14) to the pocket-size electronic device (12) in accordance with the macro instruction from the terminal (16), each command having at least a function code for selecting a program stored in the pocket-size hermetically sealed electronic device, a plurality of kinds of basic data processings being accomplished in accordance with the selected programs;

(c) selecting the program in accordance with the function code of the command;

(d) executing a basic data processing in accordance with the selected program;

(e) outputting a result of the executed basic data processing as an output signal from the pocket-size electronic device (12) when the basic data processing of the selected program is completed;

characterised by the steps of:

(f) supplying another command from the IC card reader/writer (14) to the pocket-size electronic device (12) without further macro instruction from the terminal (16) in accordance with the output signal from the pocket-size hermetically sealed electronic device; and,

(g) repeating the operation of the steps (c), (d), (e) and (f) at least one time.

9. The data processing method as claimed in claim 8, wherein the plurality of kinds of basic data processings include a data reader/write processing, a encryption/decryption processing for preventing leakage and falsification of communication data, and a password setting/password collation processing.

10. The data processing method as claimed in claim 8, wherein the pocket-size electronic device (12) comprises a hermetically sealed IC card.

**Revendications**

1. Système effectuant un traitement de données, comportant:

un dispositif électronique de poche (12), comprenant:

(a) une première mémoire (36) pour stocker des programmes devant exécuter une pluralité de types de traitements de données de base,

(b) une seconde mémoire (38) pour stocker divers types de données utilisées pour le traitement de données de base,

(c) une section de connexion (42) pour fournir des ordres, comportant au moins des codes de fonctions pour sélectionner les programmes correspondant à la pluralité de types de traitements de données de base stockés dans la première mémoire,

(d) un moyen de commande (34) pour sélectionner le programme en fonction de l'ordre provenant de la section de connexion afin d'exécuter le traitement de données de base en fonction du programme sélectionné, et pour fournir en sortie un résultat du traitement de données de base exécuté en tant que signal de sortie par l'intermédiaire de ladite section de connexion lorsque le traitement de données de base est achevé;

(e) un terminal (16) comportant une mémoire (16b) et une unité centrale (16a) pour recevoir un ordre de l'utilisateur et fournir une macro-instruction dépendant de l'ordre de l'utilisateur; et

(f) un lecteur/enregistreur de carte à puce (14) pour recevoir la macro-instruction du terminal (16) et fournir un ordre avec un code de fonction à la section de connexion

caractérisé par le fait que ledit lecteur/enregistreur de carte à puce (14) est conçu pour fournir un autre ordre avec un code de fonction à la section de connexion sans autre macro-instruction provenant du terminal (16), selon signal de sortie provenant de la section de connexion.

2. Système de traitement de données selon la revendication 1, dans lequel un autre ordre provenant du lecteur/enregistreur de carte à puce (14) et fourni à la section de connexion (42) est prédéterminé par le signal de sortie provenant de la section de connexion (42).

3. Système de traitement de données selon la revendication 1, dans lequel la pluralité de types de traitements de données de base comporte un traitement de lecture/écriture de données, un traitement d'encryptage/décryptage pour empêcher les fuites et les falsifications de données communiquées, et un traitement d'enregistrement/contrôle de mot de passe.

4. Système de traitement de données selon la revendication 1, dans lequel le dispositif électronique de poche (12) comprend une carte à puce scellée hermétiquement.

5. Système de traitement de données selon la revendication 1, dans lequel la première mémoire (36) comprend une mémoire morte à masque.

6. Système de traitement de données selon la revendication 1, dans lequel la seconde mémoire (38) comprend une mémoire morte programmable, et dans lequel le moyen de commande (34) comprend une unité centrale.

7. Système de traitement de données selon la revendication 1, dans lequel ladite seconde mémoire (38) du dispositif électronique de poche (12) est divisée en une pluralité de zones auxquelles sont séparément affectées des conditions d'accès différentes.

8. Dans un système mettant en oeuvre un traitement de données au moyen d'un dispositif électronique de poche, selon l'une quelconque des revendications précédentes, procédé de traitement de données, comportant les étapes consistant à:

(a) fournir une macro-instruction à partir d'un terminal (16) comportant une mémoire (16b) et une unité centrale (16a), à un lecteur/enregistreur de carte à puce (14) selon un ordre d'utilisateur;

(b) fournir l'un d'une pluralité d'ordres provenant du lecteur/enregistreur de carte à puce (14) au dispositif électronique de poche (12) en fonction de la macro-instruction provenant du terminal (16), chaque ordre ayant au moins un code de fonction permettant de sélectionner un programme stocké dans le dispositif électronique de poche scellé hermétiquement, une pluralité de types de traitements de données de base étant effectuée selon les programmes sélectionnés;

(c) sélectionner le programme selon le code de fonction de l'ordre;

(d) exécuter un traitement de données de base selon la programme sélectionné;

(e) fournir en sortie un résultat du traitement de données de base exécuté sous la forme d'un signal de sortie du dispositif électronique de poche (12) lorsque le traitement de données de base du programme sélectionné est achevé;

caractérisé par les étapes consistant à:

(f) fournir un autre ordre provenant du lecteur/enregistreur de carte à puce (14) au dispositif électronique de poche (12) sans autre macro-instruction provenant du terminal (16), selon le signal de sortie du dispositif électronique de poche scellé hermétiquement; et

(g) répéter les opérations (c), (d), (e) et (f) au moins une fois.

9. Procédé de traitement de données selon la revendication 8, dans lequel la pluralité de types de traitements de données de base comporte le traitement de lecture/écriture de données, un traitement d'encryptage/décryptage pour empêcher les fuites et les falsifications des données communiquées, et un traitement d'enregistrement/contrôle de mot de passe.

10. Procédé de traitement de données selon la revendication 8, dans lequel le dispositif électronique de poche (12) comprend une carte à puce scellée hermétiquement.

**Patentansprüche**

1. System, welches Datenverarbeitung durchführt, umfassend:

eine elektronische Einrichtung (12) im Taschenformat, mit

a) einem ersten Speicher (36) zum Speichern von Programmen, um eine Vielzahl von grundlegenden Datenverarbeitungsarten auszuführen,

b) einem zweiten Speicher (38), um verschiedene Arten von Daten zu speichern, die für die grundlegende Datenverarbeitung verwendet werden,

c) einem Verbindungsabschnitt (42), um Befehle, die wenigstens Funktionscodes zum Wählen der Programme für die Vielzahl von grundlegenden Datenverarbeitungsarten, die in dem ersten Speicher gespeichert sind, einschließen, zu liefern,

d) einer Steuereinrichtung (34) zum Wählen des Programms in Übereinstimmung mit dem Befehl von dem Verbindungsabschnitt, um die grundlegende Datenverarbeitung in Übereinstimmung mit dem gewählten Programm auszuführen, und zum Ausgeben eines Ergebnisses der ausgeführten, grundlegenden Datenverarbeitung als ein Ausgangssignal durch den Verbindungsabschnitt, wenn die grundlegende Datenverarbeitung abgeschlossen ist;

e) einem Anschluß (16), welcher einen Speicher (16b) und eine CPU (16a) zum Empfangen eines Benutzerbefehls und zum Liefern einer Makroanweisung in Übereinstimmung mit dem Benutzerbefehl einschließt; und

f) einem IC-Kartenleser/Schreiber (14), zum Empfangen der Makroanweisung von dem Anschluß (16) und zum Liefern eines Befehls mit einem Funktionscode an den Verbindungsabschnitt,

dadurch **gekennzeichnet,**

daß der IC-Kartenleser/Schreiber (14) konstruiert ist, einen anderen Befehl mit einem Funktionscode zu dem Verbindungsabschnitt ohne eine andere Makroanweisung von dem Anschluß (16) in Übereinstimmung mit dem Ausgangssginal von dem Verbindungsabschnitt zu liefern.

2. Datenverarbeitungssystem nach Anspruch 1, dadurch gekennzeichnet, daß ein anderer Befehl von dem IC-Kartenleser/Schreiber (14) an den Verbingungsabschnitt (42) durch das Ausgangssignal von dem Verbindungsabschnitt (42) vorbestimmt wird.

3. Datenverarbeitungssystem nach Anspruch 1, dadurch gekennzeichnet, daß die Vielzahl von grundlegenden Datenverarbeitungsarten eine Datenlese/Schreibverarbeitung, eine Verschlüsselungs-/Entschlüsselungsverarbeitung zum Verhindern von Verbreitung und Fälschung von Kommunikationsdaten, sowie eine Paßworteinstell-/Paßwort-Kolationierungsverarbeitung einschließen.

4. Datenverarbeitungssystem nach Anspruch 1, dadurch gekennzeichnet, daß die elektronische Einrichtung (12) im Taschenformat eine hermetisch abgedichtete IC-Karte umfaßt.

5. Datenverarbeitungssystem nach Anspruch 1, dadurch gekennzeichnet, daß der erste Speicher (36) einen Masken-Raum umfaßt.

6. Datenverarbeitungssystem nach Anspruch 1, dadurch gekennzeichnet, daß der zweite Speicher (38) einen ROM umfaßt, und die Steuerungseinrichtung (34) eine CPU umfaßt.

7. Datenverarbeitungssystem nach Anspruch 1, dadurch gekennzeichnet, daß der zweite Speicher (38) der elektronischen Einrichtung (12) im Taschenformat in eine Vielzahl von Zonen unterteilt ist, die getrennt verschiedenen Zugangsbedingungen zugeordnet sind.

8. Datenverarbeitungsverfahren in einem System, welches Datenverarbeitung mittels einer elektronischen Vorrichtung im Taschenformat gemäß einem der vorangehenden Ansprüche durchführt, mit den Schritten:
a) Liefern einer Makroanweisung von einem Terminal (16), welches einen Speicher (16b) und eine CPU (16a) einschließt, an einen IC-Kartenleser/Schreiber (14) in Übereinstimmung mit einem Benutzerbefehl;
b) Liefern eines von einer Vielzahl von Befehlen von dem IC-Kartenleser/Schreiber (14) an die elektronische Vorrichtung (12) im Taschenformat in Übereinstimmung mit der Makroanweisung von dem Terminal (16), wobei jeder Befehl wenigstens einen Funktionscode zum Wählen eines Programmes aufweist, das in der elektronischen, hermetisch abgedichteten Vorrichtung im Taschenformat gespeichert ist, wobei eine Vielzahl von grundlegenden Datenverarbeitungsarten in Übereinstimmung mit den gewählten Programmen durchgeführt wird;
c) Wählen des Programms in Übereinstimmung mit dem Funktionscode des Befehls;
d) Durchführen einer grundlegenden Datenverarbeitung in Übereinstimmung mit dem gewählten Programm;
e) Ausgeben eines Ergebnisses der ausgeführten, grundlegenden Datenverarbeitung als ein Ausgangsignal von der elektronischen Vorrichtung (12) im Taschenformat, wenn die grundlegende Datenverarbeitung des gewählten Programmes abgeschlossen ist;
**gekennzeichnet** durch die Schritte:
f) Liefern eines anderen Befehls von dem IC-Kartenleser/Schreiber (14) an die elektronische Vorrichtung (12) im Taschenformat ohne eine weitere Makroanweisung von dem Terminal (16) in Übereinstimmung mit dem Ausgangssignal von der elektronischen, hermetisch abgedichteten Vorrichtung im Taschenformat; und
g) Wiederholen des Vorganges der Schritte c), d), e) und f) wenigstens einmal.

9. Datenverarbeitungsverfahren nach Anspruch 8, dadurch gekennzeichnet, daß die Vielzahl von grundlegenden Datenverarbeitungsarten eine Datenlese/Schreibverarbeitung, eine Verschlüsselungs-/Entschlüsselungsverarbeitung zum Verhindern von Verbreitung und Fälschung von Kommunikationsdaten, sowie eine Paßworteinstell-/Paßwortkolationierungsverarbeitung eisnchließen.

10. Datenverarbeitungsverfahren nach Anspruch 8, dadurch gekennzeichnet, daß die elektronische Vorrichtung (12) im Taschenformat eine hermetisch abgedichtete IC-Karte einschließt.

# FIG.1

# FIG.2

10

# FIG.3

# FIG.4

# F I G . 5

# F I G . 6

# F I G . 7

START

COMMAND FROM THE USER — 100

ABSENT

PRESENT

COMMAND ANALYSIS — 102

DETERMINATION OF SELECTION AND SEQUENCE OF FUNCTIONS — 104

COMMAND OUTPUT TO CARD READER / WRITER — 106

RESPONSE FROM READER / WRITER — 108

ABSENT

PRESENT

FINAL RESPONSE ? — 110

NO

YES

13

# FIG. 8

```
                    ┌─────────────┐
                    │   START     │
                    └──────┬──────┘
                           │
                           ▼
                      ╱─────────╲  ╭─ 120
        ABSENT      ╱  COMMAND   ╲
      ◄────────────  FROM TERMINAL
                    ╲             ╱
                     ╲───────────╱
                           │ PRESENT
                           ▼
                      ╱─────────╲  ╭─ 122
                    ╱ IC CARD IN  ╲      YES
                     ╲ EXECUTION ?╱  ────────────┐
                      ╲─────────╱                │
                           │ NO                  │
                           ▼                     │
              ┌──────────────────────┐  ╭─ 126   │
              │  COMMAND ANALYSIS     │          │
              │  DETERMINATION        │          │
              │ OF COMMAND SEQUENCE   │          │
              └──────────┬───────────┘          │
                         │                 124   │
     128 ╮               ▼                       │
        ┌──────────────────────┐   ┌──────────────────────┐
        │  COMMAND OUTPUT       │   │  OUTPUT A COMMAND    │
        │    TO IC CARD         │   │   INDICATING A       │
        └──────────┬───────────┘   │  MULTIPLE COMMAND    │
                   │                │     ERRORS           │
                   ▼                └──────────┬───────────┘
              ╱─────────╲  ╭─ 130              │
   ABSENT   ╱ RESPONSE FROM╲                   │
  ◄────────   IC CARD     ╱                     │
            ╲─────────────╱                     │
                 │ PRESENT                      │
                 ▼                              │
            ╱─────────╲  ╭─ 132                 │
   YES    ╱ IS COMMAND A ╲                      │
  ◄──────  MACRO INSTRUCTION?                    │
          ╲─────────────╱                       │
                 │ NO                           │
                 ▼                              │
        ┌──────────────────────┐  ╭─ 134        │
        │ RESPONSE OUTPUT TO    │              │
        │    TERMINAL           │              │
        └──────────┬───────────┘              │
                   │◄──────────────────────────┘
```

14

# FIG.9a

FUNCTION CODE

# FIG.9b

| FUNCTION CODE | DATA |

# FIG.10

START

COMMAND FROM READER/WRITER

ABSENT

PRESENT

COMMAND EXECUTION

RESPONSE OUTPUT TO READER/WRITER

# FIG.11

USER     TERMINAL     CARD READER/ WRITER     IC CARD

CARD INSERTION

INSERTION SIGNAL

REQUEST FOR PASSNUMBER

INPUT PASSNUMBER

PASSWORD COLLATION INSTRUCTION

PASSWORD COLLATION INSTRUCTION

RESULT OF COLLATION

REQUEST FOR INPUT OF SUM OF PURCHASE

RESULT OF COLLATION

INPUT SUM OF PURCHASE

REQUEST FOR LIST (MACRO INSTRUCTION)

READ INSTRUCTION

DATA

READ INSTRUCTION

FINAL DATA

OUTPUT LIST

WRITE PURCHASE SUM (MACRO INSTRUCTION)

WRITE INSTRUCTION

REQUEST FOR INPUT

WRITE INSTRUCTION

COMPLETION OF INPUT

COMPLETION OF INPUT

DISPLAY BALANCE COMPLETION MESSAGE

16

# FIG.12

USER | TERMINAL ON USER SIDE | CARD READER/ WRITER | IC CARD | TERMINAL ON THE OTHER END

CARD INSERTION

REQUEST FOR PASS NUMBER | INSERTION SIGNAL

INPUT PASSNUMBER

INSTRUCTION FOR PASSWORD COLLATION

INSTRUCTION FOR PASSWORD COLLATION

REQUEST FOR TRANSFER DATA | RESULT OF COLLATION

RESULT OF COLLATION

TRANSFER DATA | ENCRYPTION INSTRUCTION (MACRO INSTRUCTION)

ENCRYPTION INSTRUCTION

ENCRYPTED DATA

ENCRYPTION INSTRUCTION

OUTPUT ENCRYPTED DATA

FINAL ENCRYPTED DATA

TRANSFERRING ENCRYPTED DATA

TRANSFERRING RECEIVED DATA

DECRYPTION INSTRUCTION (MACRO INSTRUCTION)

DECRYPTION INSTRUCTION

DECRYPTED DATA

DECRYPTION INSTRUCTION

OUTPUT RECEIVED DECRYPTED DATA

FINAL DECRYPTED DATA

WRITE RECEIVED PAYMENT DATA (MACRO INSTRUCTION)

WRITE INSTRUCTION

REQUEST FOR INPUT

WRITE INSTRUCTION

COMPLETION MESSAGE

COMPLETION OF INPUT

COMPLETION OF INPUT